Europäisches Patentamt

European Patent Office

Office européen des brevets

(19)

(11) Numéro de publication: **0 079 650 B1**

(12) ## FASCICULE DE BREVET EUROPEEN

(45) Date de publication du fascicule du brevet:
23.10.85

(51) Int. Cl.⁴: **B 62 K 27/12**

(21) Numéro de dépôt: **82201416.3**

(22) Date de dépôt: **09.11.82**

(54) **Dispositif de remorquage pour motocyclette.**

(30) Priorité: **13.11.81 CH 7297/81**

(43) Date de publication de la demande:
**25.05.83 Bulletin 83/21**

(45) Mention de la délivrance du brevet:
**23.10.85 Bulletin 85/43**

(84) Etats contractants désignés:
**AT BE CH DE FR GB IT LI NL SE**

(56) Documents cités:
**CH - A - 223 190**
**DE - C - 693 690**
**FR - E - 61 497**

(73) Titulaire: **LACORAY S.A., 1, Place Saint-Gervais, CH-1201 Genève (CH)**

(72) Inventeur: **Steiner, Walter, 31, rue du Livron, CH-1217 Meyrin (CH)**

(74) Mandataire: **Meylan, Robert Maurice et al, c/o Bugnion SA Conseils en Propriété Industrielle 10, Route de Florissant Case Postale 375, CH-1211 Genève 12 - Champel (CH)**

## Description

La présente invention a pour objet un dispositif de remorquage pour motocyclette comprenant un corps d'attelage destiné à être fixé à la fourche de la motocyclette à remorquer ou fixé à demeure à cette fourche et un organe d'accrochage engagé dans le corps d'attelage.

Il est généralement interdit, pour des raisons de sécurité, de remorquer une motocyclette au moyen d'un câble ou d'une corde attaché à la motocyclette remorquée, de telle sorte que le conducteur de cette dernière ne puisse pas se détacher immédiatement, en cas de danger, du véhicule remorquant. Le motocycliste remorqué est dès lors condamné à tenir la corde de remorquage d'une main et de conduire sa motocyclette de l'autre main. Une telle conduite n'est évidemment pas satisfaisante sur le plan de la sécurité. Le motocycliste aura dès lors tendance à enrouler au moins une fois la corde autour de son guidon afin de pouvoir maintenir cette corde par une faible pression de la main, tout en tenant son guidon des deux mains. Dans ce cas il est fort à craindre que la corde ne se détache pas immédiatement de la motocyclette remorquée. En outre, la traction sur la moto remorquée ne se fait pas dans l'axe de celle-ci, de telle sorte que les secousses ont pour effet de faire pivoter le guidon en risquant d'entraîner la chute du motocycliste.

Dans la demande de brevet EP-A 0 008 982 est décrit un dispositif pour accoupler deux bicyclettes ou deux cyclomoteurs ou un cyclomoteur et une bicyclette en tandem. Ce dispositif est constitué d'une barre d'accouplement dont les extrémités sont reliées aux véhicules par des articulations à cardan. Aucun moyen n'est prévu pour fixer rapidement ce dispositif de telle sorte qu'il puisse être utilisé comme dispositif de remorquage, ni pour permettre au conducteur du véhicule tracté de se détacher rapidement du véhicule tractant en cas de danger.

La présente invention a pour but d'assurer le remorquage d'une motocyclette avec la plus grande sécurité possible, c'est-à-dire en permettant au motocycliste remorqué de conduire normalement, des deux mains sa motocyclette, tout en lui laissant la possibilité de se détacher instantanément de la corde ou du câble de remorquage en cas de danger, le câble de remorquage étant en outre attaché en un point situé au moins approximativement sur l'axe de pivotement de la fourche avant.

A cet effet le dispositif de remorquage selon l'invention est caractérisé par le fait que l'organe d'accrochage est retenu dans le corps d'attelage par un verrou relié à l'extrémité d'un câble de traction dont l'autre extrémité présente des moyens de fixation à un levier de traction.

Le câble de traction est de préférence attaché à la poignée d'embrayage, de la même manière que le câble d'embrayage, soit dans le logement de celui-ci, soit dans un second logement pratiqué à côté de celui de la tête du câble d'embrayage. Cet arrangement est particulièrement judicieux, car, en cas de danger, le premier réflexe d'un motocycliste est de serrer la poignée de frein et la poignée d'embrayage afin de débrayer. Ainsi, simultanément au débrayage et au freinage, le câble de remorquage est libéré.

L'organe d'accrochage peut être constitué par un crochet ou une boucle. Ce crochet et cette boucle peuvent en outre être fixés à demeure à l'extrémité du câble de remorquage.

Une exécution intéressante consiste à utiliser le T de fourche existant comme barre d'attelage.

Le dessin annexé représente, à titre d'exemple, deux formes d'exécution de l'invention.

La figure 1 du dessin représente une vue en perspective d'une première forme d'exécution.

La figure 2 représente une vue de dessus d'une seconde forme d'exécution.

La figure 3 est une vue en coupe axiale selon III-III de la figure 2.

La figure 4 est une vue en coupe transversale selon IV-IV de la figure 2.

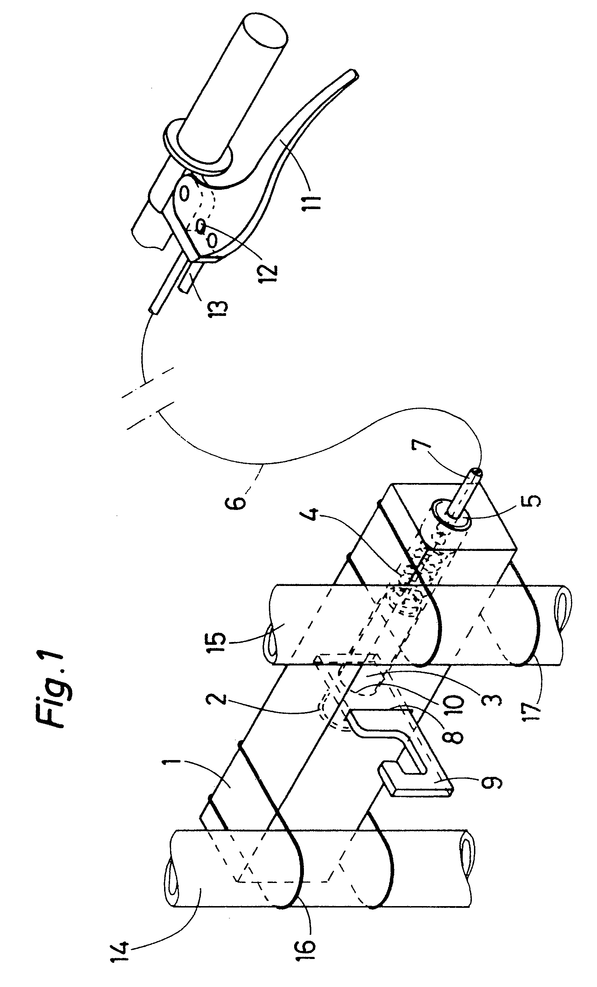

Le dispositif repésenté à la figure 1 comprend une barre d'attelage 1 constituée par une simple barre prismatique percée d'un trou borgne axial 2 dans lequel est logé un verrou cylindrique 3 maintenu au fond du trou 2 par un ressort 4 comprimé entre le verrou 3 et un bouchon fileté 5 fermant l'entrée du trou 2 et percé axialement pour le passage d'un câble de traction 6 fixé au verrou 3. Un tube en matière synthétique 7 protège le câble dans sa travesée du bouchon 5. La barre 1 présente en outre un logement transversal 8, dans sa partie médiane, dans lequel s'engage librement un crochet de remorquage 9 muni d'un trou 10 traversé librement par le verrou 3. L'autre extrémité du câble 6 est fixée à la poignée d'embrayage 11 de la moto au moyen d'une tête de câble 12, de la même manière que le câble d'embrayage 13.

Dans l'exemple représenté, la barre d'attelage 1 est fixée au moyen de cordelettes élastiques 16 et 17, mais il est bien entendu possible d'utiliser tout autre moyen de fixation rapide connu. Une fixation légère est suffisante étant donné que cette fixation n'est pratiquement pas sollicitée.

Le câble de remorquage est accroché au crochet 9. Celui-ci étant au milieu de la fourche (14, 15), juste en dessous du T de fourche, la motocyclette remorquée est accrochée judicieusement en un point situé au moins approximativement sur l'axe de pivotement de la roue avant, de telle sorte que la traction sur le crochet de remorquage n'exerce aucun couple sur la fourche susceptible de déséquilibrer le conducteur. En cas de danger, le conducteur serre la poignée d'embrayage 11, ce qui a pour effet de tirer le verrou 3 en arrière et de libérer le crochet 9.

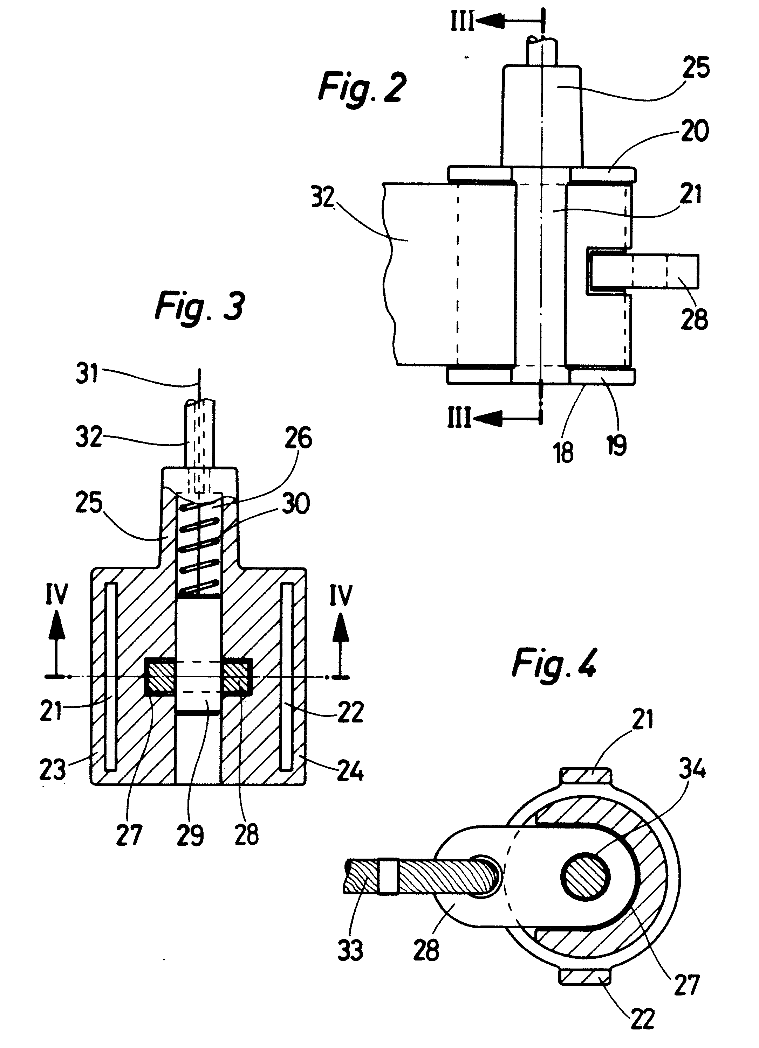

Le dispositif selon la seconde forme d'exécution, tel que représenté aux figures 2 à 4, comprend un corps d'attelage de forme générale cylindrique en matière synthétique présentant une surface cylindrique 18 limitée à ses extrémités par des rebords 19 et 20. Ces rebords 19 et 20 sont reliés par deux ponts 21 et 22, diamétralement opposés, formant deux passages 23 et 24 pour une sangle de fixation 32 destinée à la fixation du corps d'attelage à la fourche de la moto.

Le corps d'attelage présente un logement radial 27 dans lequel s'engage librement une barrette de remorquage 28 solidaire d'un câble de remorquage 33. Dans un trou 34 de cette barrette 28 s'engage un verrou cylindrique 29 creux et attaché à l'extrémité d'un câble de traction 31. Le verrou 29 peut coulisser axialement dans un alésage 26 en comprimant un ressort 30 logé dans un prolongement axial 25 du corps d'attelage sur lequel vient s'appuyer l'extrémité de la gaine 32 du câble 31.

Lorsqu'une traction est exercée sur le câble 31 le verrou 29 est tiré en direction du prolongement 25 et libère la barrette 28.

En particulier, le câble de traction 6 pourrait être attaché à un levier auxiliaire monté à proximité de l'une des poignées du guidon. Il est également possible de détacher le câble d'embrayage pour y fixer, à sa place, le câble de traction 6.

Au lieu d'un crochet de remorquage, il est possible de prévoir une boucle. Cette boucle pourrait en outre être solidaire du câble de remorquage. Ce câble de remorquage sera judicieusement monté sur un enrouleur automatique fixé à l'arrière de la motocyclette remorquante. Le verrou peut être exécuté de toutes les manières, coulissant, pivotant ou articulé. Il est notamment possible d'utiliser un verrou à levier pour augmenter la force de traction sur le verrou, de manière à faciliter la libération du crochet de remorquage.

Le dispositif peut être exécuté en métal ou, partiellement ou totalement, en matière synthétique. Il est notamment judicieux d'exécuter le verrou 3 en une matière synthétique auto-lubrifiante connue.

Le dispositif illustré, ainsi que ses variantes, sont conçus comme accessoires amovibles, mais, selon une variante d'exécution, la barre d'attelage est fixée à demeure sur la fourche de la motocyclette. On peut en outre utiliser le T de fourche inférieur existant comme barre d'attelage.

**Revendications**

1. Dispositif de remorquage pour motocyclette, comprenant un corps d'attelage (1; 18) destiné à être fixé à la fourche de la motocyclette à remorquer ou fixé à demeure à cette fourche et un organe d'accrochage (9; 28) engagé dans le corps d'attelage, caractérisé par le fait que l'organe d'accrochage (9; 28) est retenu dans le corps d'attelage (1; 18) par un verrou (3; 29) relié à l'extrémité d'un câble de traction (6; 31) dont l'autre extrémité présente des moyens de fixation (12) à un levier de traction (11) monté sur la motocyclette à remorquer.

2. Dispositif de remorquage selon la revendication 1, caractérisé par le fait que le levier de traction est constitué par la poignée d'embrayage (11) et que le câble de traction présente des moyens de fixation (12) à cette poignée d'embrayage.

3. Dispositif de remorquage selon la revendication 1 ou 2, caractérisé par le fait que le corps d'attelage est constitué par le T de fourche inférieur de la motocyclette.

4. Dispositif de remorquage selon la revendication 1 ou 2, caractérisé par le fait que le corps d'attelage est en forme générale de cylindre (18) ou de prisme (1), qu'il est muni de moyens souples de fixation (16, 17; 32) à la fourche de la motocyclette et que le verrou est constitué par une tige axiale (3; 29) maintenue par un moyen élastique (4; 30) dans un trou de l'organe d'accrochage (9; 28) contre l'action du câble de traction.

**Patentansprüche**

1. Schleppvorrichtung für Motorräder mit einem Kupplungsteil (1; 18), welcher an die Gabel des zu schleppenden Motorrades anbringbar oder dauernd an dieser Gabel befestigt ist, sowie mit einem in dem Kupplungsteil gehaltenen Schlepphaken (9; 28), dadurch gekennzeichnet, daß der Schlepphaken (9; 28) in dem Kupplungsteil (1; 18) von einem Riegel (3; 29) gehalten wird, welcher mit dem Ende eines Zugkabels (6; 31) verbunden ist, dessen anderes Ende eine Einrichtung (12) zur Verbindung mit einem Zughebel (11) an dem zu schleppenden Motorrad aufweist.

2. Schleppvorrichtung nach Anspruch 1, dadurch gekennzeichnet, daß der Zughebel aus dem Kupplungshebel (11) besteht und daß das Zugkabel eine Verbindungseinrichtung (12) für diesen Kupplungshebel aufweist.

3. Schleppvorrichtung nach Anspruch 1 oder 2, dadurch gekennzeichnet, daß der Kupplungsteil von dem unteren Gabel-T des Motorrades gebildet wird.

4. Schleppvorrichtung nach Anspruch 1 oder 2, dadurch gekennzeichnet, daß der Kupplungsteil eine allgemeine Zylinderform (18) oder Prismenform (1) aufweist und mit geschmeidigen Befestigungseinrichtungen (16, 17; 32) für die Gabel des Motorrades versehen ist und daß der Riegel aus einem axialen Schaft (3; 29) besteht, welcher mittels einer elastischen Einrichtung (4; 30) in einem Loch des Kupplungsteiles (9; 28) gegen die Wirkung des Zugkabels gehalten wird.

**Claims**

1. A device for towing a motor bicycle, which comprises a towing unit body (1; 18) adapted to be fastened detachably or permanently to the front fork of the motor bicycle to be towed, and a hitching member (9; 28) fitted in said towing unit body, characterized by the fact that the hitching member (9; 28) is retained in the towing unit body (1; 18) by a bolt (3; 29) connected to one end of a traction cable (6; 31) having its opposite end provided with means (12) for anchoring the cable to a traction lever (11) fitted on the motor bicycle to be towed.

2. The motor bicycle towing according to claim 1, characterized by the fact that said traction lever consists of the clutch control lever (11) and the traction cable comprises means (12) for anchoring this cable to the clutch control lever.

3. The motor bicycle towing device according to claim 1 or 2, characterized by the fact that said towing unit body consists of the lower T-member of the front fork of the motor bicycle.

4. The motor bicycle towing device according to claim 1 or 2, characterized by the fact that said towing unit body has a generally cylindrical (18) or prismatic (1) configuration and is provided with flexible means (16, 17; 32) for attaching same to the front fork of the motor bicycle, and that said bolt consists of an axial rod (3; 29) urged by resilient means (4; 30) for engagement in a hole formed in said hitching member (9; 28) against the action of said traction cable.

# Fig.1

Fig. 2

Fig. 3

Fig. 4